# FASCICULE DE BREVET EUROPEEN

(11) **EP 3 083 187 B1**
(45) Date de publication et mention de la délivrance du brevet: **07.07.2021**
(21) Numéro de dépôt: 14818996.2
(22) Date de dépôt: 19.12.2014
(51) Int. Cl.: B29C 48/36, B29C 48/25, B29B 7/50, B29C 48/68

(54) **EXTRUDEUSE COMPORTANT UN ORGANE HOMOGENEISATEUR PERFECTIONNE ET PROCÉDÉ D'EXTRUSION D'UN MATÉRIAU VISQUEUX**
EXTRUDER MIT VERBESSERTEM HOMOGENISIERUNGSELEMENT UND VERFAHREN ZUM EXTRUDIEREN EINES VISKOSEN MATERIALS
EXTRUDER COMPRISING AN IMPROVED HOMOGENISING MEMBER AND METHOD FOR EXTRUDING A VISCOUS MATERIAL

(30) Priorité: 20.12.2013 FR 1363250
(43) Date de publication de la demande: 26.10.2016
(73) Titulaire: Compagnie Générale des Etablissements Michelin, 63000 Clermont-Ferrand (FR)
(72) Inventeur: VIGNON, Fabien, F-63040 Clermont-Ferrand Cedex 9 (FR); LHOSPITALIER, Jean-François, F-63040 Clermont-Ferrand Cedex 9 (FR)
(74) Mandataire: Redouté, Gilles Pierre
(86) Numéro de dépôt international: PCT/EP2014/078925
(87) Numéro de publication internationale: WO 2015/092054

(56) Documents cités:
- CN-A- 101 992 538
- CN-A- 101 992 538
- GB-A- 842 692
- JP-A- S5 532 630
- US-A- 2 200 997
- US-A- 3 102 694
- US-A- 3 164 375
- US-A- 3 921 794
- US-A- 4 199 263
- US-B1- 6 709 147

## Description

L'invention se rapporte au domaine de l'extrusion des matériaux plastiques, et plus particulièrement des matériaux à base de caoutchouc.

Traditionnellement, ces matériaux sont mis en forme à l'aide d'un moyen d'extrusion comprenant une vis sans fin filetée, mise en rotation dans un fourreau cylindrique et débouchant sur des moyens de profilage.

De manière à améliorer les caractéristiques des produits obtenus, de nombreuses adaptations ont été apportées à la conception des extrudeuses et plus particulièrement des vis d'extrudeuse. On retrouve ainsi, de manière connue, une zone d'alimentation, destinée à recevoir les matériaux dans un état solide ou peu visqueux, puis une zone de travail ou de plastification dans laquelle on élève la pression et la température du matériau afin de pouvoir en assurer le transfert en aval du dispositif, une zone d'homogénéisation dans laquelle le matériau est malaxé pour assurer une bonne régularité de ses propriétés, et une partie finale débouchant dans une filière d'extrusion ou dans un dispositif de mise en forme tel qu'un moule. L'essentiel de l'énergie fournie au matériau provient de l'énergie mécanique transmise par la vis d'extrusion qui se transforme en énergie thermique sous l'effet du cisaillement que subit le matériau en passant par les différentes zones de travail énoncées ci-dessus.

L'invention s'intéresse plus particulièrement à la zone d'homogénéisation dans laquelle on cherche à rendre isotropes les caractéristiques rhéologiques telles que la température et la fluidité dans l'ensemble du matériau sortant.

On connaît des solutions, notamment celles décrites dans les documents US 3 164 375, GB 842 692, US 3 102 694 ou JP S55 32630, dans lesquelles le fourreau de l'extrudeuse comporte des filets qui sont mis en rotation par rapport aux filets de la vis rotative. Les filets de la vis et du fourreau sont continus et sont leurs sommets sont espacés radialement sur toute la longueur de l'extrudeuse. De par cet agencement des filets, lors de la rotation de la vis et du fourreau, le flux de matière circulant dans les filets de la vis est mélangé avec celui des filets du fourreau, sans toutefois pouvoir appliquer des forces de cisaillement importantes au mélange. On connaît également d'autres solutions par CN-101 992 538 A et US-6 709 147 B1.

Pour remédier à ce problème, d'autre documents décrivent cette partie de l'outil d'extrusion qui comprend des doigts, du type de ceux décrits dans la publication US 6 709 147, ou des couteaux fixes, proposés à titre d'exemple dans la publication FR 2 580 984, débouchant radialement dans l'espace interne du fourreau, et collaborant avec des filets de vis interrompus.

La forme et l'orientation des couteaux ou des éléments de filet, ont essentiellement pour objet de subdiviser et de recombiner les flux de matériau un grand nombre de fois comme cela est expliqué en détail dans la publication DE 31 50 757 ou la publication DE 38 05 849. La zone d'homogénéisation comprend alors une succession d'étages d'éléments de filet, avantageusement en forme de lames, et qui sont portés respectivement par la vis et par le fourreau. Les éléments de filet portés par la vis sont aménagés de manière à laisser des espaces annulaires libres dans lesquels les éléments de filet fixes disposés sur la paroi interne du fourreau circulent.

On observe toutefois que le niveau d'énergie conféré au mélange de caoutchouc au niveau de la zone d'homogénéisation reste important, et n'est pas toujours adapté au type de matériau que l'on désire mettre en oeuvre.

Une solution consiste alors à rendre les doigts mobiles radialement, comme cela est décrit dans la publication US 4 199 263, de manière à adapter le nombre de doigts, et donc le niveau de travail obtenu, à la nature du mélange. Une même extrudeuse pourra alors être configurée simplement à chaque changement de séquence de production ou pendant une même séquence de production, pour permettre la mise en oeuvre de mélanges très différents tels que des mélanges à base de caoutchoucs synthétiques ou à base de caoutchoucs naturels.

Il n'en demeure pas moins que la vis d'extrusion, dont la forme est adaptée pour recevoir un grand nombre de doigts, reste en place dans le fourreau entre deux séquences de production. Et le niveau d'énergie conféré au mélange peut s'avérer encore trop élevé lorsque la composition du matériau est sensible à une élévation de température ou que le matériau ne nécessite pas un degré d'homogénéisation très important.

L'invention a pour objet d'apporter une solution à cette situation de manière à permettre l'extrusion d'une large gamme de mélanges de caoutchoucs de rhéologies différentes avec un même outil d'extrusion.

Cet objectif est atteint par l'extrudeuse destinée à la mise en forme d'un matériau visqueux tel qu'un mélange de caoutchouc selon la revendication 1 et le procédé d'extrusion d'un matériau visqueux tel qu'un mélange de caoutchouc selon la revendication 9.

Selon l'invention, une portion de vis de la zone d'homogénéisation comprend des éléments de filets s'étendant radialement vers l'extérieur qui sont interrompus pour former des espaces annulaires libres dans lesquels s'étendent radialement vers l'intérieur les filets d'une portion de fourreau. Ainsi, les filets de la vis et ceux du fourreau s'interpénètrent, les filets du fourreau s'étendant radialement au-delà des filets du fourreau rotatif. Les filets de la vis et du fourreau ainsi réalisés sont entraînés en rotation ce qui permet d'obtenir un meilleur travail de cisaillement du mélange dans cette portion de zone d'homogénéisation, tout en pouvant moduler ce travail en fonction de la vitesse et du sens d'entraînement de la vis et du fourreau.

On arrive ainsi à adapter plus finement les efforts appliqués par la machine en fonction du matériau du mélange qui la traverse et à obtenir un mélange très homogène en sortie.

De préférence, la zone d'homogénéisation de la vis comporte au moins une couronne montée sur la vis comportant lesdits éléments de filets qui sont imbriqués dans lesdits éléments de filets portés par une couronne formant fourreau. Par couronne comportant des éléments de filets de vis imbriqués dans les éléments de filets de fourreau, on comprend que les sommets des filets de la vis et ceux du fourreau s'étendent radialement au-delà des sommets des filets du fourreau et se superposent axialement sur la largeur de la couronne. Ceci permet d'obtenir un ensemble très compact apte à développer des forces de cisaillement importantes. Avantageusement, cet ensemble de couronnes est monté amovible sur l'extrudeuse, pour encore plus de flexibilité dans le réglage des efforts appliqués au mélange.

Avantageusement, le diamètre de la vis dans la zone de l'extrudeuse se trouvant en amont de la zone d'homogénéisation est inférieur au diamètre de la vis dans la zone d'homogénéisation. Ceci permet de conserver une section de passage constante du matériau entre la zone amont de la zone d'homogénéisation et cette dernière afin que le matériau ne subisse pas de perte de charge au passage d'une zone à l'autre et qu'il puisse ainsi être mieux travaillé. De préférence, il a été constaté lors des tests effectués en laboratoire que le diamètre extérieur de la vis dans la zone en amont doit être 1,2 à 2 fois plus petit que le diamètre extérieur des filets de vis dans la zone d'homogénéisation, la valeur étant choisie en fonction de la taille de la machine et du type de matériau travaillé pour assurer une bonne homogénéité de celui-ci en sortie d'extrudeuse.

Selon l'invention, la portion de fourreau délimitant la zone d'homogénéisation est entraînée en rotation par des moyens d'entraînement indépendants des moyens d'entraînement de la vis. On comprend ainsi que ladite portion de fourreau est entraînée en rotation par un motoréducteur distinct de celui d'entraînement en rotation de la vis.

Il est alors possible de régler indépendamment l'un de l'autre le sens ou la vitesse de rotation de la vis et du fourreau rotatif de manière à faire varier le nombre de coupes ou de subdivisions du mélange de caoutchouc.

On peut également augmenter les débits d'extrusion fournis par l'extrudeuse, car l'énergie fournie au mélange provient des moyens d'entraînement de la portion de fourreau délimitant la zone d'homogénéisation qui sont distincts de ceux d'entraînement de la vis.

L'invention peut également faire l'objet de variantes d'exécution dans lesquelles les caractéristiques préférentielles sont les suivantes :
- la zone d'homogénéisation est placée dans la partie aval de la ligne d'extrusion.
- les éléments de filets portés par le fourreau rotatif forment avec l'axe de rotation XX' un angle positif, de sorte qu'ils sont organisés selon une hélice orientée dans le même sens que le sens de l'hélice formée par les filets de la vis
- les éléments de filets portés par le fourreau rotatif forment avec l'axe de rotation XX' un angle négatif, de sorte qu'ils sont organisés selon une hélice orientée dans le sens contraire au sens de l'hélice formée par les filets de la vis.
- les éléments de filets portés par le fourreau rotatif forment avec l'axe de rotation XX' un angle nul.
- un ou plusieurs éléments de filet portés par le fourreau rotatif sont entrainés individuellement en rotation sur eux-mêmes autour d'un axe radial.
- dans la zone d'homogénéisation, les éléments de filets de la vis et du fourreau rotatif ont une forme de lame comportant au moins une arête tranchante faisant face à la partie amont de la zone d'homogénéisation.
- les éléments de filet portés par le fourreau rotatif sont des doigts de forme sensiblement cylindrique

L'invention concerne également le procédé de mise en œuvre d'un dispositif d'extrusion ayant les caractéristiques énoncées ci-dessus, et dans lequel on fait varier la vitesse du fourreau rotatif par rapport à la vitesse de la vis et/ ou leur sens de rotation, de manière à adapter l'état rhéologique du mélange circulant au travers de la zone d'homogénéisation.

De manière préférentielle ou pourra également :
- piloter l'écart de vitesse de rotation entre la vis et le fourreau rotatif en fonction de la température du mélange à l'entrée de la zone d'homogénéisation
- piloter l'écart de vitesse de rotation entre la vis et le fourreau rotatif en fonction de la rugosité du matériau en sortie de l'extrudeuse.
- piloter l'écart de vitesse de rotation entre la vis et le fourreau rotatif en fonction de la variation du rendement de l'extrudeuse.
- faire tourner le fourreau rotatif dans le même sens de rotation que la vis à une vitesse égale ou supérieure.
- après une phase d'arrêt de l'extrudeuse, faire tourner le fourreau rotatif en maintenant la vis à l'arrêt, de manière à remonter le niveau de température du mélange contenu dans la zone d'homogénéisation.
- faire tourner le fourreau rotatif à une vitesse de rotation inférieure à la vitesse de rotation de la vis ou dans le sens inverse du sens de rotation de la vis.
- entrainer le fourreau rotatif en rotation sous le seul effet de l'avance du mélange propulsé par la rotation de la vis et circulant dans la zone d'homogénéisation.
- exercer un couple freineur sur le fourreau rotatif de manière à ce que la vitesse de rotation du fourreau rotatif soit inférieure à la vitesse de rotation de la vis
- faire tourner la vis et le fourreau rotatif alternativement dans le même sens et dans des sens contraires de manière à vider successivement les différents étages de filets situés dans la zone d'homogénéisation.

L'invention sera mieux comprise à la lecture des figures annexées, qui sont fournies à titre d'exemples et ne présentent aucun caractère limitatif, dans lesquelles :
- La figure 1 représente une vue générale schématique en coupe d'une extrudeuse selon l'invention.
- La figure 2 représente une vue en coupe et plus détaillée de la zone d'homogénéisation.
- La figure 3 représente une vue schématique en perspective des éléments de filet d'une couronne de fourreau rotatif.
- La figure 4, représente une vue schématique en perspective des éléments de filet de la vis représentés à l'intérieur d'une couronne de fourreau rotatif.
- Les figures 5, 6 et 7 représentent des formes et des arrangements particuliers des éléments de filet du fourreau rotatif.
- Les figures 8 et 9 représentent des arrangements particuliers de l'orientation hélicoïdale des éléments de filet dans la zone d'homogénéisation par rapport à l'orientation des filets de la vis.
- La figure 10 représente le nombre de coupes réalisées en fonction du rapport de vitesse entre la vis et le fourreau rotatif.

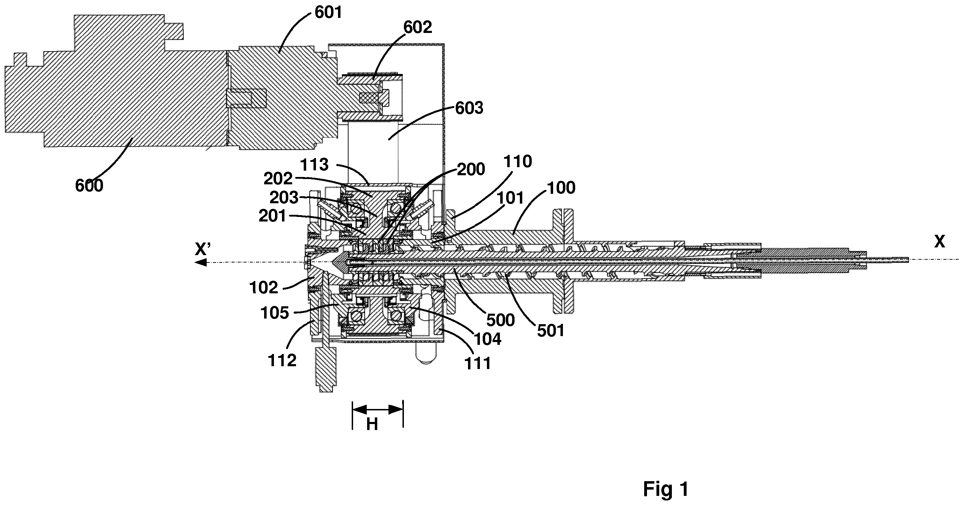

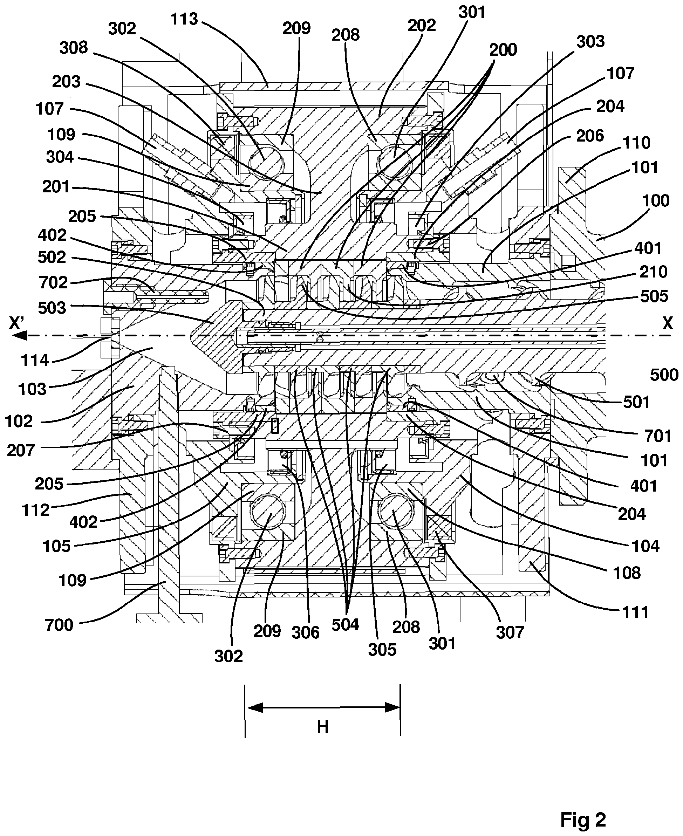

Le dispositif d'extrusion illustré à la figure 1 et, plus en détails, à la figure 2 comprend une vis dont l'arbre 500 supporte un ou plusieurs filets hélicoïdaux 501. La vis est entrainée en rotation dans un fourreau fixe 100, lisse ou fileté, autour d'un axe central XX' par un premier ensemble moto réducteur (non représenté). Les filets de la vis 501, s'étendent radialement vers l'extérieur depuis le corps ou l'arbre central 500 de la vis, et sont orientés selon la forme générale d'une hélice, de sorte que le matériau progresse dans le dispositif d'extrusion de l'amont vers l'aval, dans le sens de l'axe XX'.

La partie terminale du fourreau fixe 100, en aval de l'extrudeuse, supporte l'ensemble mécanique dans lequel est intégré le fourreau rotatif.

Cet ensemble mécanique comprend une structure support formée de deux couronnes de maintien : une couronne de maintien amont 111 fixée à une flasque de fixation 110 disposée à l'extrémité du fourreau fixe 100 par un jeu de boulons (non représentés), et une couronne de maintien frontale 112. Les deux couronnes de maintien 111 et 112 sont reliées entre elles par un capot porteur 113, auquel elles sont fixées par des jeux de boulons (non représentés).

La couronne de maintien frontale 112 supporte le nez 102 de l'extrudeuse dans lequel se loge la voute 103 débouchant dans le canal d'extrusion 114.

Une tête de fourreau fixe 101 prolonge, vers l'aval et en interne, le fourreau 100 auquel elle est reliée par un boulonnage (non représenté).

La portion axiale de l'extrudeuse située entre l'aval de la tête de fourreau 101 et en amont de la voute 103, forme une zone H dédiée à l'homogénéisation du mélange, dans laquelle prend place le dispositif d'homogénéisation comprenant le fourreau rotatif proprement dit.

L'arbre de la vis 500 comporte une partie terminale 502 située dans la zone d'homogénéisation H, qui supporte un cône d'extrémité 503 occupant une partie de l'espace intérieur de la voute 103.

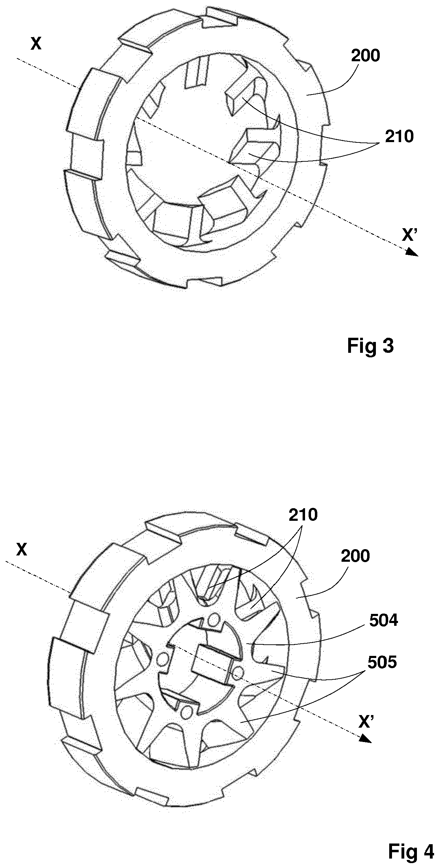

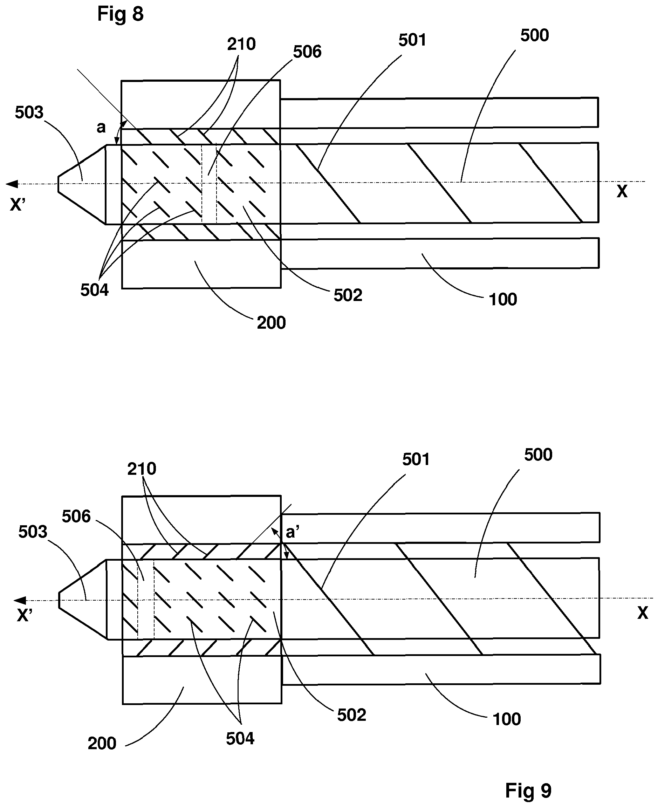

Dans la zone d'homogénéisation H, la partie terminale 502 de l'arbre 500 supporte une pluralité de couronnes 504 comportant des éléments de filets 505 (voir pour plus de détails la figure 3) s'étendant radialement vers l'extérieur. Les éléments de filet 505 sont disposés axialement de manière à dégager des espaces annulaires libres 506 ou rainures (en référence aux figures 8 et 9) destinés à recevoir les éléments de filet supportés par le fourreau rotatif. Les éléments de filets 505 sont arrangés entre eux selon une forme d'hélice de même sens que l'hélice formée par les filets 501 de la vis.

Deux anneaux porteurs 104 et 105 sont fixés respectivement sur la couronne de maintien amont 111 et sur la couronne de maintien frontale 112. Ces deux anneaux porteurs 104 et 105 supportent l'ensemble tournant constitué par les éléments mécaniques formant le fourreau rotatif.

Le fourreau rotatif proprement dit est constitué d'une pluralité de couronnes 200 supportant des éléments de filet 210 s'étendant radialement vers l'intérieur, comme cela est illustré à la figure 3. Les éléments de filet 210 sont disposés axialement dans les espaces annulaires 506 laissés libres par les éléments 210 de la vis. De la sorte, les éléments de filet disposés sur la vis et sur le fourreau rotatif peuvent tourner librement autour de l'axe XX' sans venir en contact les uns avec les autres.

Les couronnes 200 sont supportées par un premier arbre creux porteur 201, relié par une jante de liaison 203 à un second arbre creux moteur 202.

Deux chemins de roulement sont aménagés axialement sur les parties radialement internes de l'arbre moteur 202, respectivement 208 et 209, et sur les parties radialement externes des anneaux porteurs 104 et 105, respectivement 108 et 109, entre lesquels circulent deux jeux de billes, respectivement 301 et 302, assurant la rotation de l'arbre porteur et de l'arbre moteur autour de l'axe XX'.

La prévention des fuites de la partie interne de l'homogénéisateur, dans laquelle circulent les mélanges de caoutchouc sous pression est assurée par un jeu de paliers secs respectivement 401 et 402. Ces paliers sont installés respectivement sur la partie radialement externe de la tête de fourreau 101, et sur la partie radialement externe du nez 102. Les paliers secs 401 et 402, glissent sur des portées d'usure respectivement 204 et 205 fixées par un jeu de boulons, respectivement 206 et 207, sur les deux parties axialement opposées de la partie radialement interne de l'arbre creux porteur 201. Dans une variante, on peut utiliser des joints racleurs du type joint composite double effet pour réaliser l'étanchéité de la partie interne de l'homogénéisateur.

Des conduits 106 et 107 autorisent la circulation du fluide de régulation thermique au sein du fourreau rotatif. Et des joints tournants 303, 304, 305, 306, 307, 308 assurent l'étanchéité entre les pièces fixes et les pièces en rotation.

L'arbre creux moteur 202 est entrainé en rotation par une chaine 603 reliée à des pignons 602 disposés en sortie d'un motoréducteur 601 entrainé par un moteur 600.

Des moyens de mesure de la température 702 ou de la pression en amont ou en aval de la zone homogénéisation, respectivement 701 et 700, peuvent être implantés de manière à recueillir des informations sur l'état rhéologique du mélange en cours d'extrusion et avant sa sortie du dispositif.

Le dispositif d'extrusion ayant servi de base à la présente description propose de disposer la zone d'homogénéisation H dans la partie aval de l'extrudeuse, c'est-à-dire en amont immédiat du nez 102 et de la voute 103. Mais il est tout à fait possible d'implanter un fourreau rotatif conforme à l'invention plus en amont, en tête de l'extrudeuse par exemple. Le fourreau rotatif pourra alors être utilisé pour assurer la plastification du mélange par une montée en température rapide. Cette action pourra être augmentée, lorsque les éléments de filets du fourreau rotatif sont entrainés en rotation autour de leur axe radial.

La forme des éléments de filet disposés sur la vis ou sur le fourreau rotatif peut faire l'objet de nombreuses variantes choisies en fonction de la variété des mélanges que l'on souhaite mettre en œuvre et des effets que l'on souhaite obtenir.

Pour améliorer le degré d'homogénéisation du mélange sortant, on cherchera à augmenter le nombre de coupes, c'est-à-dire le nombre de subdivisions et de recombinaison du flux permettant le brassage de chaque volume élémentaire de mélange.

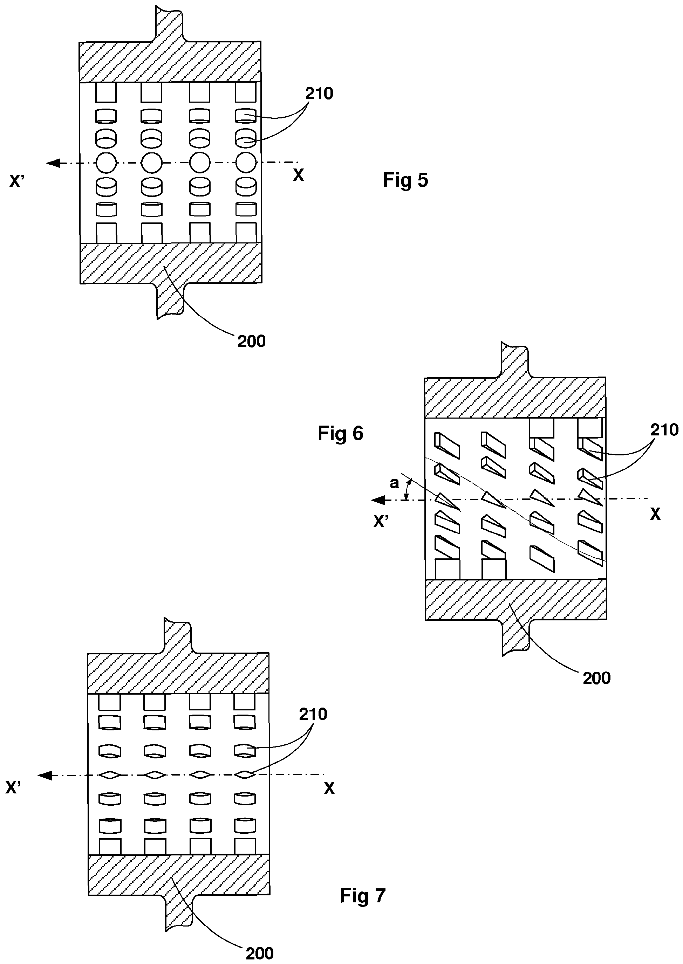

A cet effet, on choisira pour le fourreau rotatif comme pour la vis des éléments de filet 210, 505 en forme de lame, présentant au moins une arête vive et tranchante apte à séparer les flux de matière. Cette arête tranchante est placée du côté amont et fait face à l'arrivée du flux de matière comme cela est illustré à la figure 6.

De préférence, les éléments de filet 210 du fourreau rotatif sont organisés les uns par rapport aux autres sur des lignes sensiblement hélicoïdales (voir figure 6), dans le but d'assurer la fonction de vidage de l'outil d'extrusion en fin de séquence, et de réduire la perte de charge induite par l'homogénéisateur dans certaines conditions de fonctionnement.

De manière optionnelle, les lames peuvent avoir une deuxième arête tranchante disposée en aval du sens de circulation du flux, comme cela est illustré à la figure 7.

Les lames 210 du fourreau rotatif forment avec la direction axiale XX' un angle qui peut être positif, nul ou négatif selon les effets que l'on cherche à obtenir. On considérera que l'angle a est positif lorsque les éléments de filet formés par les lames 210 sont organisés pour former une hélice orientée dans le même sens que l'orientation de l'hélice des filets 501 et 505 de la vis comme cela est illustré à la figure 8 ; et que l'angle a' est négatif lorsque les éléments de filet formés par les lames 210 sont organisés pour former une hélice orientée dans le sens contraire de l'orientation de l'hélice des filets 501 et 505 comme cela est illustré à la figure 9. L'angle est nul lorsque les lames sont orientées sensiblement dans la direction de l'axe XX' comme cela est illustré à la figure 7.

On peut aussi disposer des éléments de filet en forme de doigts cylindriques s'étendant radialement vers l'intérieur depuis la face radialement interne de la couronne 200 comme cela est illustré à la figure 5.

Et, de manière à augmenter les effets de cisaillement, on peut aussi faire tourner les doigts ou les éléments de filet autour de leur axe radial, moyennant la mise en place dans le fourreau rotatif des dispositifs mécaniques supplémentaires adaptés, comme cela a été suggéré ci-dessus.

Lors de la mise en œuvre d'une extrudeuse comportant les caractéristiques décrites ci-dessus, il devient possible de faire varier le sens et la vitesse de rotation du fourreau rotatif pour adapter l'outil à des mélanges ayant des propriétés rhéologiques éloignées, mais également, on pourra modifier certaines de ces caractéristiques en cours d'extrusion.

Le nombre de coupes, c'est à dire le nombre de subdivisions qu'il est possible de réaliser par tour va dépendre de la vitesse de rotation, du nombre d'étages composés chacun par l'association d'une couronne portée par la vis 505 et d'une couronne portée par le fourreau rotatif 200 tel qu'illustré à la figure 4, du nombre d'éléments de filet (210, 504) présents dans un étage et du sens de rotation du fourreau par rapport à la vis.

En faisant tourner le fourreau rotatif dans le même sens que la vis, et à la même vitesse que cette dernière, le nombre de coupes sera nul, l'homogénéisateur se comporte comme un étage supplémentaire de stabilisation purement passif dans lequel le mélange circule en recevant la seule énergie liée à la perte de charge engendrée par le passage au travers des espaces laissés libres entre les éléments de filets de la vis et du fourreau rotatif. On veillera donc, dans cette configuration, à disposer angulairement les éléments de filet de la vis et du fourreau les uns par rapport aux autres, de manière à laisser un passage de section suffisante pour ne pas créer une perte de charge trop importante.

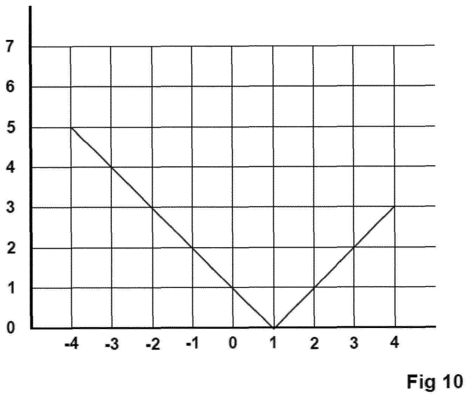

La figure 10, dans laquelle figurent en abscisse le rapport de vitesse entre le fourreau rotatif et la vis, et en ordonnée le nombre de coupes du mélange opéré par tour par un élément de filet, permet de mieux comprendre le fonctionnement de l'homogénéisateur.

Lorsque le fourreau rotatif tourne dans le même sens et à la même vitesse angulaire que la vis, le rapport entre les deux vitesses est égal à 1, et le nombre de coupes, comme on l'a vu ci-dessus, est égal à zéro.

Lorsque le fourreau rotatif tourne toujours dans le même sens que la vis, mais à une vitesse supérieure, le nombre de coupes augmente proportionnellement à l'augmentation de ce rapport. Dans cette configuration, le fourreau rotatif se comporte également comme un générateur de pression. On pourra donc utilement se placer dans cette configuration lorsque l'on veut augmenter le débit de la machine sans augmenter de manière trop importante la température du mélange, ou lorsque l'on souhaite augmenter le débit global de la ligne d'extrusion.

Lorsque le fourreau rotatif tourne à une vitesse inférieure à celle de la vis ou lorsqu'il tourne en sens contraire, le nombre de coupes augmente également, en raison du fait que le fourreau rotatif engendre alors une perte de charge négative favorisant également le travail conféré au mélange. Dans le cas où, les éléments de filets portés par le fourreau forme avec l'axe XX' un angle (a') négatif d'hélice des couronnes et le fourreau tourne à une vitesse inférieure à celle de la vis ou en sens contraire alors le fourreau rotatif est générateur de pression. Dans le cas où, les éléments de filets portés par le fourreau forme avec l'axe XX' un angle (a) positif d'hélice des couronnes et le fourreau tourne à une vitesse supérieur à celle de la vis alors le fourreau rotatif est générateur de pression.

Ainsi, l'homme du métier pourra adapter le sens et la forme des hélices, l'angle des lames, le nombre d'étages et le nombre d'éléments de filet par étage, le sens et la vitesse de rotation, en fonction de la gamme de mélanges qu'il souhaite mettre en oeuvre dans le dispositif d'extrusion. Il pourra ainsi utiliser un même outil pour extruder une gamme de mélanges ayant des compositions et des caractéristiques rhéologiques étendues, et il trouvera dans la combinaison des possibilités offertes de nombreuses applications spécifiques adaptées à ses besoins.

Une des applications possibles réside dans la réduction du nombre d'étages de l'homogénéisateur pour réduire l'échauffement du matériau tout en conservant une qualité d'homogénéisation optimale.

Une autre application consiste à jouer sur les vitesses relatives pour optimiser le travail fourni au mélange pendant les phases transitoires liées à des arrêts et à des redémarrages de l'outil d'extrusion au cours d'une même séquence, ou pour vider le mélange restant dans l'extrudeuse en fin de séquence de production.

Ainsi, après un arrêt de la machine d'extrusion, pour un changement de profil d'extrusion par exemple, le mélange se trouvant dans la zone d'homogénéisation peut avoir tendance à refroidir, alors que le mélange présent dans le corps de la vis en amont peut avoir tendance à s'échauffer. (Le mélange prend la température des éléments de la machine, généralement la vis est à 90°C, le fourreau à 90°C et fourreau rotatif à 50°C). Au redémarrage de l'outil, on maintient quelques instants la vis à l'arrêt, et on fait tourner le fourreau rotatif pour rehausser le niveau thermique du mélange ayant résidé dans la zone d'homogénéisation pendant la durée de l'arrêt. Puis, on redémarre la vis à petite vitesse en faisant tourner le fourreau rotatif dans le même sens pour éviter de conférer au mélange chaud ayant séjourné en amont de la zone d'homogénéisation de monter en température. Lorsque les conditions de température du mélange sont stabilisées, on peut alors augmenter la vitesse de rotation de la vis et du fourreau rotatif pour atteindre le débit optimal de fonctionnement de l'outil d'extrusion.

On peut utiliser l'extrudeuse de l'invention pour améliorer l'aspect du produit en sortie de la machine. Pour ceci, on pilote l'écart de vitesse de rotation entre la vis et le fourreau rotatif en fonction de la rugosité du matériau en sortie de l'extrudeuse, rugosité qui est lue par un capteur optique ou caméra placé en sortie de la machine. Ainsi, lorsque la rugosité du produit sortant n'est pas satisfaisante, on augmente la vitesse de rotation du fourreau rotatif par rapport à celle de la vis en le faisant tourner dans un sens contraire que celle-ci, ce qui a pour effet d'augmenter le nombre de coupes et donc le travail fourni au mélange jusqu'à obtenir la rugosité souhaitée.

On peut également utiliser l'extrudeuse de l'invention pour mieux gérer les phases d'arrêt, attente et de redémarrage de l'extrudeuse. Pour ceci, on pilote l'écart de vitesse de rotation entre la vis et le fourreau rotatif en fonction de la variation du rendement de l'extrudeuse. Par rendement de l'extrudeuse on définit le débit en sortie par unité de temps. Ainsi, après des phases d'arrêt et d'attente, on constate, lors du redémarrage, une élévation de la température du mélange qui est liée à la perte de rendement de l'extrudeuse due à l'échauffement du mélange présent dans l'extrudeuse, ce qui a pour conséquence un patinage de la vis. Il est ainsi nécessaire de limiter le travail apporté au mélange. Pour ceci, on fait varier la vitesse du fourreau rotatif par rapport à celle de la vis en fonction du patinage de la vis. Plus le patinage (et donc la perte de rendement de la vis) est important, plus la vitesse du fourreau doit être proche de celle de la vis, les deux tournant dans le même sens. Au fur et à mesure que le patinage de la vis diminue, l'écart de vitesses entre le fourreau rotatif et la vis va augmenter.

Lorsque l'on souhaite limiter le travail mécanique conféré au mélange on pourra passer le fourreau rotatif en mode passif, qui consiste à laisser le fourreau tourner autour de l'axe XX' sous le seul effet de la circulation du mélange propulsé par la rotation de la vis et circulant dans la zone d'homogénéisation. Dans cette configuration, lorsque l'on souhaite également que la vitesse de rotation du fourreau rotatif soit inférieure à la vitesse de rotation de la vis, il peut s'avérer nécessaire, selon l'orientation des éléments de filet du fourreau rotatif, d'appliquer un couple freineur au fourreau rotatif. Ce couple freineur génère un courant électrique au niveau du moteur 600, Ce courant électrique généré peut être réutilisé pour l'entrainement du moteur de la vis ceci afin d'optimiser le rendement global de l'extrudeuse.

Pour vidanger le dispositif on fait tourner la vis et le fourreau rotatif alternativement dans le même sens et dans des sens contraires de manière à vider successivement les différents étages de filets situés dans la zone d'homogénéisation.

Les modes de réalisation de l'invention servant de base à la présente description ne sont donc pas limitatifs, pour autant qu'ils permettent d'obtenir les effets techniques tels que revendiqués.

### Lexique des numérotations utilisées

100 : fourreau (fixe)
101 : fourreau fixe, tête du fourreau (fixe)
102 : fourreau nez, de l'extrudeuse
103 : fourreau fixe, voute de l'extrudeuse
104 : fourreau fixe, anneau porteur
105 : fourreau fixe, anneau porteur
106 : fourreau fixe, entrée moyens de régulation thermique
107 : fourreau fixe, sortie moyens de régulation thermique
108 : fourreau fixe, chemin de roulement (roulement à billes 301)
109 : fourreau fixe, chemin de roulement (roulement à billes 302)
110 : fourreau fixe, flasque de fixation
111 : fourreau fixe, couronne de maintien amont
112 : fourreau fixe, couronne de maintien frontale
113 : fourreau fixe, capot porteur
114 : canal d'extrusion
200 : fourreau rotatif, couronne supportant les éléments de filet au niveau de l'homogénéisateur
201 : fourreau rotatif, arbre creux porteur (des éléments 200)
202 : fourreau rotatif, arbre creux moteur
203 : fourreau rotatif, jante de liaison
204 : fourreau rotatif, portée d'usure (sur laquelle circule le palier sec 401)
205 : fourreau rotatif, portée d'usure (sur laquelle circule le pallier sec 402)
206 : fourreau rotatif, boulons de fixation
207 : fourreau rotatif, boulons de fixation
208 : fourreau rotatif, chemin de roulement (roulement à billes 301)
209 : fourreau rotatif, chemin de roulement (roulement à billes 302)
210 : fourreau rotatif, éléments de filets portés par la couronne 200, montée sur l'arbre creux porteur 201
301 : roulement à bille
302 : roulement à bille
303 : joint tournant
304 : joint tournant
305 : joint tournant
306 : joint tournant
307 : joint tournant
308 : joint tournant
401 : palier sec (étanchéité)
402 : palier sec (étanchéité)
500 : arbre de la vis
501 : filets de la vis
502 : partie terminale de l'arbre de la vis
503 : cône d'extrémité de la vis
504 : couronnes montées sur la vis supportant les éléments de filet 505 au niveau de l'homogénéisateur
505 : élément de filets de la vis portés par les couronnes 504
506 : espace annulaire libre
600 : moteur d'entrainement du fourreau rotatif
601 : variateur de vitesse
602 : pignon de sortie
603 : transmission
700 : sonde de pression aval
701 : sonde de pression amont
702 : sonde de température

## Revendications

1. Extrudeuse destinée à la mise en forme d'un matériau visqueux tel qu'un mélange de caoutchouc, comprenant une vis entrainée en rotation par des moyens d'entraînement comprenant un premier motoréducteur autour d'un axe (XX') dans un fourreau (100) et portant un ou plusieurs filets hélicoïdaux (501) s'étendant radialement vers l'extérieur depuis un arbre central (500) de la vis, l'extrudeuse comprenant une zone d'homogénéisation (H) du matériau qui est placée, par rapport au sens d'extrusion de la vis sans fin, dans la partie aval de l'extrudeuse à travers laquelle s'étend axialement une portion de vis comprenant des éléments de filets (505) interrompus formant des espaces annulaires libres (506), et une portion de fourreau délimitant ladite zone d'homogénéisation portant des éléments de filets (210), **caractérisée en ce que** lesdits éléments de filets (210) du fourreau s'étendent radialement vers l'intérieur dans lesdits espaces annulaires libres (506) au-delà des sommets des éléments de filets (505) de la vis et **en ce que** la portion de fourreau délimitant la zone d'homogénéisation est elle-même entrainée en rotation autour de l'axe XX' par des moyens d'entraînement qui comprennent un motoréducteur (601) entraîné par un moteur (600) et distinct du premier motoréducteur, de sorte que lesdits moyens d'entraînement de ladite portion de fourreau sont indépendants des moyens d'entraînement de la vis, pour former un fourreau rotatif.

2. Extrudeuse selon la revendication 1, **caractérisée en ce que** la zone d'homogénéisation de la vis comporte au moins une couronne (504) montée sur la vis (500) comportant lesdits éléments de filets (505) qui sont imbriqués dans lesdits éléments de filets (210) portés par une couronne (200) formant fourreau.

3. Extrudeuse selon l'une des revendications 1 ou 2, **caractérisée en ce que** le diamètre de la vis dans la zone de l'extrudeuse se trouvant en amont de la zone d'homogénéisation est inférieur au diamètre de la vis dans la zone d'homogénéisation.

4. Extrudeuse selon l'une des revendications précédentes, dans laquelle les éléments de filets portés par le fourreau rotatif (210) forment avec l'axe de rotation XX' un angle (a) positif, de sorte qu'ils sont organisés selon une hélice orientée dans le même sens que le sens de l'hélice formée par les filets (501, 504) de la vis.

5. Extrudeuse selon l'une des revendications précédentes, dans laquelle les éléments de filets (210) portés par le fourreau rotatif forment avec l'axe de rotation XX' un angle (a') négatif, de sorte qu'ils sont organisés selon une hélice orientée dans le sens contraire au sens de l'hélice formée par les filets (501, 504) de la vis.

6. Extrudeuse selon l'une des revendications précédentes, dans laquelle les éléments de filets portés par le fourreau rotatif forment avec l'axe de rotation XX' un angle nul.

7. Extrudeuse selon l'une des revendications 1 à 6, dans laquelle un ou plusieurs éléments de filets portés par le fourreau rotatif sont entrainés individuellement en rotation sur eux-mêmes autour d'un axe radial.

8. Extrudeuse selon l'une des revendications 1 à 7, dans laquelle, dans la zone d'homogénéisation (H), les éléments de filets de la vis (504) et du fourreau rotatif (210) ont une forme de lame comportant au moins une arête tranchante faisant face à l'extrémité amont de la zone d'homogénéisation par rapport au sens d'extrusion.

9. Procédé d'extrusion d'un matériau visqueux tel qu'un mélange de caoutchouc dans lequel on utilise une extrudeuse comprenant une vis entrainée en rotation par des moyens d'entraînement comprenant un premier motoréducteur autour d'un axe (XX') dans un fourreau (100) et portant un ou plusieurs filets hélicoïdaux (501) s'étendant radialement vers l'extérieur depuis un arbre central (500) de la vis, l'extrudeuse comprenant une zone d'homogénéisation (H) du matériau qui est placée, par rapport au sens d'extrusion de la vis sans fin, dans la partie aval de l'extrudeuse. à travers laquelle s'étend axialement une portion de vis comprenant des éléments de filets (505) interrompus formant des espaces annulaires libres (506), et une portion de fourreau délimitant ladite zone d'homogénéisation portant des éléments de filets (210), **caractérisée en ce que** lesdits éléments de filets (210) du fourreau s'étendent radialement vers l'intérieur dans lesdits espaces annulaires libres (506) au-delà des sommets des éléments de filets (505) de la vis, **en ce que** la portion de fourreau délimitant la zone d'homogénéisation est elle-même entrainée en rotation autour de l'axe XX' par des moyens d'entraînement qui comprennent un motoréducteur (601) entraîné par un moteur (600) et distinct du premier motoréducteur, de sorte que lesdits moyens d'entraînement de ladite portion de fourreau sont indépendants des moyens d'entraînement de la vis, pour former un fourreau rotatif, et dans lequel on fait varier la vitesse du fourreau rotatif par rapport à la vitesse de la vis et/ou le sens de rotation du fourreau par rapport à la vis, de manière à adapter l'état rhéologique du matériau visqueux circulant au travers de la zone d'homogénéisation.

10. Procédé selon la revendication 9, dans lequel on pilote l'écart de vitesse de rotation entre la vis et le fourreau rotatif en fonction de la température du matériau visqueux à l'entrée de la zone d'homogénéisation.

11. Procédé selon la revendication 9 ou la revendication 10, dans lequel on pilote l'écart de vitesse de rotation entre la vis et le fourreau rotatif en fonction de la rugosité du matériau en sortie de l'extrudeuse.

12. Procédé selon la revendication 9 ou la revendication 10, dans lequel on pilote l'écart de vitesse de rotation entre la vis et le fourreau rotatif en fonction de la variation du rendement de l'extrudeuse.

13. Procédé selon la revendication9 ou la revendication 10, dans lequel le fourreau rotatif tourne dans le même sens de rotation que la vis à une vitesse égale ou supérieure.

14. Procédé selon la revendication 9 ou la revendication 10, dans lequel; après une phase d'arrêt de l'extrudeuse, on fait tourner le fourreau rotatif en maintenant la vis à l'arrêt, de manière à remonter le niveau de température du matériau visqueux contenu dans la zone d'homogénéisation.

15. Procédé selon la revendication 9 ou la revendication 10, dans lequel le fourreau rotatif tourne à une vitesse de rotation inférieure à la vitesse de rotation de la vis ou dans le sens inverse du sens de rotation de la vis.

## Patentansprüche

1. Extruder, welcher zur Formgebung eines viskosen Materials wie etwa einer Kautschukmischung bestimmt ist, eine Schnecke umfassend, die von Antriebsmitteln, die einen ersten Getriebemotor umfassen, um eine Achse (XX') in einem Zylinder (100) drehend angetrieben wird und einen oder mehrere schraubenförmige Gewindegänge (501) trägt, die sich von einer zentralen Welle (500) der Schnecke radial nach außen erstrecken, wobei der Extruder einen Homogenisierungsbereich (H) des Materials umfasst, welcher, bezogen auf die Extrusionsrichtung der Schnecke, im stromabwärtigen Teil des Extruders angeordnet ist, durch welchen sich ein Schneckenabschnitt axial erstreckt, der unterbrochene Gewindegangelemente (505) umfasst, die freie ringförmige Räume (506) bilden, und wobei ein Zylinderabschnitt, der den Homogenisierungsbereich begrenzt, Gewindegangelemente (210) trägt, **dadurch gekennzeichnet, dass** sich die Gewindegangelemente (210) des Zylinders in den freien ringförmigen Räumen (506) radial nach innen erstrecken, über die Scheitel der Gewindegangelemente (505) der Schnecke hinaus, und dadurch, dass der Zylinderabschnitt, der den Homogenisierungsbereich begrenzt, selbst von Antriebsmitteln um die Achse XX' drehend angetrieben wird, welche einen Getriebemotor (601) umfassen, der von einem Motor (600) angetrieben wird und von dem ersten Getriebemotor verschieden ist, so dass die Antriebsmittel dieses Zylinderabschnitts von den Antriebsmitteln der Schnecke unabhängig sind, um einen rotierenden Zylinder zu bilden.

2. Extruder nach Anspruch 1, **dadurch gekennzeichnet, dass** der Homogenisierungsbereich der Schnecke wenigstens einen auf der Schnecke (500) angebrachten Kranz (504) aufweist, der die Gewindegangelemente (505) aufweist, welche in die Gewindegangelemente (210) eingreifen, die von einem Kranz (200) getragen werden, der den Zylinder bildet.

3. Extruder nach einem der Ansprüche 1 oder 2, **dadurch gekennzeichnet, dass** der Durchmesser der Schnecke in dem Bereich des Extruders, der sich stromaufwärts des Homogenisierungsbereichs befindet, kleiner als der Durchmesser der Schnecke im Homogenisierungsbereich ist.

4. Extruder nach einem der vorhergehenden Ansprüche, wobei die von dem rotierenden Zylinder getragenen Gewindegangelemente (210) mit der Drehachse XX' einen positiven Winkel (a) bilden, so dass sie gemäß einer Schraubenlinie organisiert sind, die in derselben Richtung ausgerichtet ist wie die von den Gewindegängen (501, 504) der Schnecke gebildete Schraubenlinie.

5. Extruder nach einem der vorhergehenden Ansprüche, wobei die von dem rotierenden Zylinder getragenen Gewindegangelemente (210) mit der Drehachse XX' einen negativen Winkel (a') bilden, so dass sie gemäß einer Schraubenlinie organisiert sind, die in der Richtung ausgerichtet ist, die zur Richtung der von den Gewindegängen (501, 504) der Schnecke gebildeten Schraubenlinie entgegengesetzt ist.

6. Extruder nach einem der vorhergehenden Ansprüche, wobei die von dem rotierenden Zylinder getragenen Gewindegangelemente mit der Drehachse XX' einen Winkel null bilden.

7. Extruder nach einem der Ansprüche 1 bis 6, wobei ein oder mehrere von dem rotierenden Zylinder getragene Gewindegangelemente einzeln um eine radiale Achse um sich selbst drehend angetrieben werden.

8. Extruder nach einem der Ansprüche 1 bis 7, wobei im Homogenisierungsbereich (H) die Gewindegangelemente der Schnecke (504) und des rotierenden Zylinders (210) die Form einer Klinge haben, die wenigstens eine Schneidkante aufweist, die, bezogen auf die Extrusionsrichtung, dem stromaufwärtigen Ende des Homogenisierungsbereichs zugewandt ist.

9. Verfahren zum Extrudieren eines viskosen Materials wie etwa einer Kautschukmischung, bei dem ein Extruder verwendet wird, der eine Schnecke umfasst, die von Antriebsmitteln, die einen ersten Getriebemotor umfassen, um eine Achse (XX') in einem Zylinder (100) drehend angetrieben wird und einen oder mehrere schraubenförmige Gewindegänge (501) trägt, die sich von einer zentralen Welle (500) der Schnecke radial nach außen erstrecken, wobei der Extruder einen Homogenisierungsbereich (H) des Materials umfasst, welcher, bezogen auf die Extrusionsrichtung der Schnecke, im stromabwärtigen Teil des Extruders angeordnet ist, durch welchen sich ein Schneckenabschnitt axial erstreckt, der unterbrochene Gewindegangelemente (505) umfasst, die freie ringförmige Räume (506) bilden, und wobei ein Zylinderabschnitt, der den Homogenisierungsbereich begrenzt, Gewindegangelemente (210) trägt, **dadurch gekennzeichnet, dass** sich die Gewindegangelemente (210) des Zylinders in den freien ringförmigen Räumen (506) radial nach innen erstrecken, über die Scheitel der Gewindegangelemente (505) der Schnecke hinaus, dadurch, dass der Zylinderabschnitt, der den Homogenisierungsbereich begrenzt, selbst von Antriebsmitteln um die Achse XX' drehend angetrieben wird, welche einen Getriebemotor (601) umfassen, der von einem Motor (600) angetrieben wird und von dem ersten Getriebemotor verschieden ist, so dass die Antriebsmittel dieses Zylinderabschnitts von den Antriebsmitteln der Schnecke unabhängig sind, um einen rotierenden Zylinder zu bilden, und wobei die Geschwindigkeit des rotierenden Zylinders in Bezug auf die Geschwindigkeit der Schnecke und/oder die Drehrichtung des Zylinders in Bezug auf die Schnecke variiert werden, um so den rheologischen Zustand des viskosen Materials anzupassen, das durch den Homogenisierungsbereich strömt.

10. Verfahren nach Anspruch 9, wobei der Unterschied der Rotationsgeschwindigkeit zwischen der Schnecke und dem rotierenden Zylinder in Abhängigkeit von der Temperatur des viskosen Materials am Eingang des Homogenisierungsbereichs gesteuert wird.

11. Verfahren nach Anspruch 9 oder Anspruch 10, wobei der Unterschied der Rotationsgeschwindigkeit zwischen der Schnecke und dem rotierenden Zylinder in Abhängigkeit von der Rauigkeit des Materials am Ausgang des Extruders gesteuert wird.

12. Verfahren nach Anspruch 9 oder Anspruch 10, wobei der Unterschied der Rotationsgeschwindigkeit zwischen der Schnecke und dem rotierenden Zylinder in Abhängigkeit von der Änderung der Leistung des Extruders gesteuert wird.

13. Verfahren nach Anspruch 9 oder Anspruch 10, wobei der rotierende Zylinder in derselben Drehrichtung wie die Schnecke mit der gleichen oder einer höheren Geschwindigkeit rotiert.

14. Verfahren nach Anspruch 9 oder Anspruch 10, wobei man nach einer Stillstandsphase des Extruders den rotierenden Zylinder rotieren lässt und dabei die Schnecke im Stillstand hält, um so das Temperaturniveau des viskosen Materials, das im Homogenisierungsbereich enthalten ist, zu erhöhen.

15. Verfahren nach Anspruch 9 oder Anspruch 10, wobei der rotierende Zylinder mit einer Rotationsgeschwindigkeit, die niedriger als die Rotationsgeschwindigkeit der Schnecke ist, oder in der zur Drehrichtung der Schnecke entgegengesetzten Richtung rotiert.

## Claims

1. Extruder intended for shaping a viscous material such as a blend of rubber, comprising a screw rotationally driven by drive means comprising a first geared motor unit about an axis (XX') in a barrel (100) and bearing one or more helical flights (501) extending radially outwards from a central shaft (500) of the screw, the extruder comprising a material homogenization zone (H) which is positioned, with respect to the direction of extrusion of the endless screw, in the downstream part of the extruder and through which a screw portion comprising interrupted flight elements (505) forming empty annular spaces (506) extends axially, and a barrel portion delimiting the said homogenization zone bearing flight elements (210) **characterized in that** the said flight elements (210) of the barrel extend radially inwards into the said empty annular spaces (506) beyond the vertices of the flight elements (505) of the screw, and **in that** the barrel portion delimiting the homogenization zone is itself rotationally driven about the axis XX' by drive means which comprise a geared motor unit (601) driven by a motor (600) and distinct from the first geared motor unit, so that the said drive means driving the said barrel portion are independent of the drive means driving the screw, to form a rotary barrel.

2. Extruder according to Claim 1, **characterized in that** the homogenization zone of the screw comprises at least one ring (504) mounted on the screw (500) comprising the said flight elements (505) which are imbricated between the said flight elements (210) borne by a barrel-forming ring (200).

3. Extruder according to either of Claims 1 and 2, **characterized in that** the diameter of the screw in the zone of the extruder that lies upstream of the homogenization zone is less than the diameter of the screw in the homogenization zone.

4. Extruder according to one of the preceding claims, in which the flight elements borne by the rotary barrel (210) form, with the axis of rotation XX', a positive angle (a) such that they are organized in a helix oriented in the same direction as the direction of the helix formed by the flights (501, 504) of the screw.

5. Extruder according to one of the preceding claims, in which the flight elements (210) borne by the rotary barrel form, with the axis of rotation XX', a negative angle (a') such that they are organized in a helix oriented in the opposite direction to the direction of the helix formed by the flights (501, 504) of the screw.

6. Extruder according to one of the preceding claims, in which the flight elements borne by the rotary barrel form, with the axis of rotation XX', a zero angle.

7. Extruder according to one of Claims 1 to 6, in which one or more flight elements borne by the rotary barrel are individually rotationally driven on themselves about a radial axis.

8. Extruder according to one of Claims 1 to 7, in which, in the homogenization zone (H), the flight elements of the screw (504) and of the rotary barrel (210) have the form of a blade comprising at least one cutting edge facing the upstream end of the homogenization zone with respect to the direction of extrusion.

9. Method for extruding a viscous material such as a blend of rubber, wherein use is made of an extruder comprising a screw rotationally driven by drive means comprising a first geared motor unit about an axis (XX') in a barrel (100) and bearing one or more helical flights (501) extending radially outwards from a central shaft (500) of the screw, the extruder comprising a material homogenization zone (H) which is positioned, with respect to the direction of extrusion of the endless screw, in the downstream part of the extruder and through which a screw portion comprising interrupted flight elements (505) forming empty annular spaces (506) extends axially, and a barrel portion delimiting the said homogenization zone bearing flight elements (210) **characterized in that** the said flight elements (210) of the barrel extend radially inwards into the said empty annular spaces (506) beyond the vertices of the flight elements (505) of the screw, **in that** the barrel portion delimiting the homogenization zone is itself rotationally driven about the axis XX' by drive means which comprise a geared motor unit (601) driven by a motor (600) and distinct from the first geared motor unit, so that the said drive means driving the said barrel portion are independent of the drive means driving the screw, to form a rotary barrel, and in which the speed of the rotary barrel with respect to the speed of the screw and/or the direction of rotation of the barrel with respect to the screw are/is varied in order to alter the rheological state of the viscous material flowing through the homogenization zone.

10. Method according to Claim 9, in which the difference in rotational speed between the screw and the rotary barrel is controlled as a function of the temperature of the viscous material at the inlet to the homogenization zone.

11. Method according to Claim 9 or Claim 10, in which the difference in rotational speed between the screw and the rotary barrel is controlled as a function of the roughness of the material at the outlet of the extruder.

12. Method according to Claim 9 or Claim 10, in which the difference in rotational speed between the screw and the rotary barrel is controlled as a function of the variation in output of the extruder.

13. Method according to Claim 9 or Claim 10, in which the rotary barrel rotates in the same direction of rotation as the screw at the same or a higher speed.

14. Method according to Claim 9 or Claim 10, in which, after the extruder has been stopped for some time, the rotary barrel is made to rotate while keeping the screw stationary, so as to raise the temperature of the viscous material contained in the homogenization zone again.

15. Method according to Claim 9 or Claim 10, in which the rotary barrel rotates at a rotational speed lower than the rotational speed of the screw or in the opposite direction to the direction of rotation of the screw.
